# FASCICULE DE BREVET EUROPEEN

(11) **EP 3 612 912 B1**
(45) Date de publication et mention de la délivrance du brevet: **31.08.2022**
(21) Numéro de dépôt: 18718620.0
(22) Date de dépôt: 06.04.2018
(51) Int. Cl.: G06F 3/01, H04N 21/4223, H04N 21/4402, H04N 21/442, H04N 21/4627

(54) **PROCÉDÉ DE LECTURE D'UN FLUX VIDÉO**
VERFAHREN ZUM LESEN EINES VIDEOSTROMS
METHOD FOR READING A VIDEO STREAM

(30) Priorité: 20.04.2017 FR 1753411
(43) Date de publication de la demande: 26.02.2020
(73) Titulaire: Viaccess, 92057 Paris La Défense Cedex (FR)
(72) Inventeur: HAMON, Vincent, 35000 Rennes (FR)
(74) Mandataire: Colombo, Michel
(86) Numéro de dépôt international: PCT/FR2018/050858
(87) Numéro de publication internationale: WO 2018/193177

(56) Documents cités:
- EP-A1- 3 026 923
- WO-A2-2008/134014
- US-A1- 2011 256 932
- US-A1- 2014 304 721

## Description

L'invention concerne un procédé de lecture d'un flux vidéo. L'invention concerne également un terminal, un serveur d'agrégation et un support d'enregistrement d'informations pour la mise en œuvre de ce procédé.

Par « compression », on désigne ici l'opération consistant à réduire le nombre de bits utilisés pour coder une même information. On désigne comme information compressée le résultat de cette opération. Par « décompression », on désigne l'opération inverse, qui permet d'obtenir, à partir de l'information compressée, l'information sous la forme qu'elle avait avant d'être compressée, et comme information décompressée son résultat.

Par « chiffrement », on désigne l'opération consistant à rendre inintelligible une information à l'aide d'une information secrète appelée « clef de chiffrement » de manière à ce que cette information puisse être de nouveau rendue intelligible seulement à l'aide de cette clef, ou d'une autre clef correspondant à cette clef. On désigne comme information chiffrée le résultat de cette opération. Par « déchiffrement », on désigne l'opération inverse, qui permet d'obtenir, à l'aide d'une information secrète appelée « clé de déchiffrement », à partir de l'information chiffrée, l'information sous la forme qu'elle avait avant d'être chiffrée, et comme information déchiffrée son résultat.

Des procédés de lecture d'un flux vidéo sont connus, par exemple, de la demande WO2008/134014. Dans ces procédés connus, un premier terminal :
- collecte au moins une mesure représentative d'un comportement d'un utilisateur du premier terminal et construit à partir de ladite au moins une mesure collectée au moins une donnée caractéristique de ce comportement de cet utilisateur,
- décode le flux vidéo pour obtenir un premier flux vidéo en bande de base qui est indépendant de ladite au moins une mesure collectée, puis
- compose, à partir de ladite au moins une donnée caractéristique construite et du premier flux vidéo en bande de base, un second flux vidéo en bande de base qui varie en fonction de ladite au moins une donnée caractéristique construite.

Ensuite, le second flux vidéo est affiché par un dispositif d'affichage tel qu'un casque de réalité virtuelle. Le second flux vidéo dépend spécifiquement du comportement de l'utilisateur lors de la lecture du flux vidéo. Typiquement, le comportement de l'utilisateur est une position et/ou un déplacement de l'utilisateur du terminal en train de lire le flux vidéo, dont dépend la composition du second flux vidéo.

Par exemple, si l'utilisateur pointe son regard vers la droite, le second flux vidéo code uniquement des fractions d'image situées à droite de l'image complète, c'est-à-dire les fractions d'image que l'utilisateur souhaite regarder.

Dans un tel contexte, copier le second flux vidéo lorsque le terminal est utilisé par un premier utilisateur pour le rejouer plus tard a peu d'intérêt. En effet, lorsque le second flux vidéo est rejoué, il y a très peu de chance qu'un second utilisateur, qui peut, ou non, être le premier, reproduise exactement le même comportement que celui du premier utilisateur. Dès lors, le flux vidéo rejoué n'est plus fonction du comportement du second utilisateur, ce qui réduit très fortement l'intérêt de rejouer ce second flux vidéo. En effet, dans ce cas, au mieux, le second utilisateur voit exactement les mêmes choses que ce qui a été vu par le premier utilisateur. Par contre, il ne peut pas explorer les images du flux vidéo comme pouvait le faire le premier utilisateur, c'est-à-dire en modifiant son comportement.

Seul le premier flux vidéo permet de composer le second flux vidéo pour tous les comportements possibles de l'utilisateur. Toutefois, ce premier flux vidéo n'est pas directement et simplement accessible sur un port de sortie du terminal. Au contraire, l'accès à ce premier flux vidéo est généralement protégé par des mesures matérielles et/ou logicielles de sécurité.

Pour copier et diffuser, souvent illicitement, une copie complète du premier flux vidéo, il a été proposé de reconstruire ce premier flux vidéo à partir de plusieurs exemplaires du second flux vidéo obtenus pour différents comportements de l'utilisateur. Cette attaque est illustrée par l'exemple simplifié suivant. Supposons que :
- lorsque l'utilisateur regarde à droite, le terminal compose un premier exemplaire du second flux vidéo qui contient uniquement la moitié droite de chaque image du premier flux vidéo, et
- lorsque l'utilisateur regarde à gauche, le terminal compose un deuxième exemplaire du second flux vidéo qui contient uniquement la moitié gauche de chaque image du premier flux vidéo.

Pour obtenir une copie complète du premier flux vidéo, l'attaquant peut lire une première fois le flux vidéo en conservant systématiquement sa tête tournée vers la droite pendant toute la durée de jeu du flux vidéo. Il obtient ainsi un premier exemplaire du second flux vidéo qu'il enregistre. Puis, il lit une nouvelle fois le même flux vidéo mais, cette fois-ci, en conservant systématiquement sa tête tournée vers la gauche. Il obtient alors un deuxième exemplaire du second flux vidéo qu'il enregistre. Ensuite, en assemblant correctement les images des premier et second exemplaires du second flux vidéo, il peut reconstruire une copie complète du premier flux vidéo. Par « copie complète » du premier flux vidéo, on désigne une copie à partir de laquelle il est possible de composer le second flux vidéo en fonction du comportement de l'utilisateur de la même manière que le terminal lorsqu'il lit la version originale du premier flux vidéo. Lorsque le flux vidéo est transmis en différé et à la demande, pour générer les différents exemplaires souhaités du second flux vidéo, l'attaquant peut soit générer les différents exemplaires les uns après les autres en lisant plusieurs fois le même flux vidéo. Dans tous les cas, l'attaquant, ou un groupe d'attaquants agissant en collusion, peut aussi lire simultanément le même flux vidéo sur plusieurs terminaux pour générer en parallèle les différents exemplaires souhaités du second flux vidéo.

Dans la pratique, pour obtenir une copie complète du premier flux vidéo, il faut généralement de nombreux exemplaires du second flux vidéo générés avec des comportements différents de l'utilisateur. Dans ces conditions, pour faciliter la génération de ces différents exemplaires du second flux vidéo, il a été proposé d'utiliser des automates pour réaliser les différents comportements souhaités. Par exemple, lorsque le comportement de l'utilisateur qui fait varier le second flux vidéo est un déplacement de cet utilisateur, un automate permet de réaliser ce déplacement bien plus précisément qu'un être humain. De plus, une fois correctement programmé, il n'y a plus besoin d'intervention humaine pour générer l'exemplaire souhaité du second flux vidéo.

De l'état de la technique est également connu de :
- EP3026923A1,
- US2014/304721A1,
- US2011/256932A1.

L'invention a pour but de modifier un procédé connu de lecture d'un flux vidéo pour rendre plus difficile l'obtention d'une copie complète du premier flux vidéo à partir du second flux vidéo.

Elle a donc pour objet un procédé de lecture d'un flux vidéo conforme à la revendication 1.

Le procédé revendiqué exploite le fait que pour construire une copie complète du premier flux vidéo à partir de plusieurs exemplaires du second flux vidéo, il faut mettre en œuvre des comportements d'utilisateur qui ne correspondent pas aux comportements normaux d'un utilisateur qui ne cherche pas à obtenir une copie complète du premier flux vidéo. Par la suite, ces comportements qui ne correspondent pas à des comportements normaux, sont qualifiés d'« anormaux ». Par exemple, dans l'exemple décrit plus haut, regarder constamment et uniquement à droite ou regarder constamment et uniquement à gauche, est un comportement anormal.

Le procédé revendiqué détecte automatiquement ces comportements anormaux en comparant les données caractéristiques du comportement construites par le terminal, à des seuils prédéterminés. Ensuite, en réponse au franchissement d'un ou plusieurs de ces seuils, une contre-mesure est automatiquement exécutée. Son exécution rend plus difficile la construction d'une copie complète du premier flux vidéo. Dès lors, le procédé revendiqué est plus résistant vis-à-vis des attaques visant à construire une copie complète du premier flux vidéo à partir d'exemplaires du second flux vidéo.

De plus, le procédé revendiqué est difficile à déjouer. En effet, il est très difficile de simuler un comportement normal d'un utilisateur à l'aide, par exemple, d'un automate.

Enfin, le procédé revendiqué utilise la même donnée caractéristique que celle utilisée pour composer le second flux vidéo. Ainsi, il n'est pas nécessaire de collecter et de construire des données spécifiquement dédiées aux déclenchements de contre-mesure.

Les modes de réalisation de ce procédé de lecture peuvent comporter une ou plusieurs des caractéristiques des revendications dépendantes.

Ces modes de réalisation du procédé de lecture peuvent présenter un ou plusieurs des avantages suivants :
- La construction de données statistiques représentant le comportement normal d'un utilisateur lors de la lecture du flux vidéo puis la comparaison à un premier seuil prédéterminé d'un écart entre ces données statistiques et les données caractéristiques du comportement de l'utilisateur du terminal permet de détecter un comportement anormal. Par exemple, cela permet de détecter un comportement qui ne tient pas compte du contenu cognitif du flux vidéo joué. En effet, le comportement normal de l'utilisateur dépend généralement du contenu cognitif du flux vidéo joué. Ainsi, par exemple, la majorité des utilisateurs regardent souvent la même partie de l'image au même moment. Or, pour reconstruire une copie complète du premier flux vidéo, il faut recourir à des comportements qui permettent d'obtenir l'affichage de toutes les parties de chaque image et donc y compris les parties de l'image qui ne sont pas normalement regardées par les utilisateurs. Ainsi, regarder des parties de l'image qui ne sont pas normalement regardées constitue un exemple de comportement anormal, dont la détection, isolément ou en combinaison avec d'autres comportements anormaux, conduit à déclencher l'exécution d'une contre-mesure. De plus, il est très difficile, voire impossible pour un automate de comprendre le contenu cognitif du flux vidéo joué et donc de simuler correctement le comportement normal d'un être humain. Ainsi, il semble difficile de déjouer la détection de ce type de comportements anormaux à l'aide d'un automate.
- Utiliser, en tant que données statistiques, une cartographie qui indique pour chaque pixel d'une image la probabilité qu'un utilisateur pointe son regard en direction de ce pixel permet de discriminer de façon très fiable un comportement anormal d'un comportement normal.
- Utiliser une donnée caractéristique de la vitesse ou de l'accélération du déplacement de l'utilisateur permet de détecter, de façon fiable, au sens de digne de confiance, ou sûre, ou avec une forte probabilité de succès, un comportement anormal. En effet, les déplacements possibles d'un être humain sont limités par les limites physiologiques du corps humain. Les déplacements possibles d'un automate ne présentent pas les mêmes limites. Ainsi, s'il est détecté qu'une caractéristique de la vitesse ou de l'accélération du déplacement dépasse les capacités physiologiques normales d'un être humain, il est pratiquement certain qu'il s'agit d'un déplacement réalisé par un automate et donc d'un comportement anormal.
- L'utilisation d'un classifieur à apprentissage supervisé simplifie la discrimination entre un comportement anormal et un comportement normal.
- Le calcul d'une note globale qui est fonction à la fois des résultats du classifieur, des données caractéristiques de la vitesse ou de l'accélération du déplacement et des données statistiques, permet d'améliorer la fiabilité de la détection d'un comportement anormal et donc de déclencher de façon plus appropriée les contre-mesures.

L'invention a également pour objet un ensemble d'un premier terminal et de plusieurs seconds terminaux de lecture d'un flux vidéo pour la mise en œuvre du procédé revendiqué.

L'invention a également pour objet un serveur d'agrégation de données pour la mise en œuvre du procédé revendiqué.

Enfin, l'invention a également pour objet un support d'enregistrement d'informations comportant des instructions pour la mise en œuvre du procédé revendiqué, lorsque ces instructions sont exécutées par un microprocesseur.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un système de génération et de lecture d'un flux vidéo compressé et chiffré ;
- la figure 2 est une illustration schématique de l'architecture d'un lecteur du flux vidéo mis en œuvre dans le système de la figure 1 ;
- la figure 3 est une illustration schématique d'une image complète du flux vidéo ;
- la figure 4 est un organigramme d'un procédé de génération du flux vidéo mis en œuvre dans le système de la figure 1 ;
- les figures 5 et 6 sont des organigrammes d'un procédé de lecture du flux vidéo mis en œuvre dans le système de la figure 1 ;
- la figure 7 est une illustration schématique de données statistiques mises en œuvre dans le système de la figure 1.

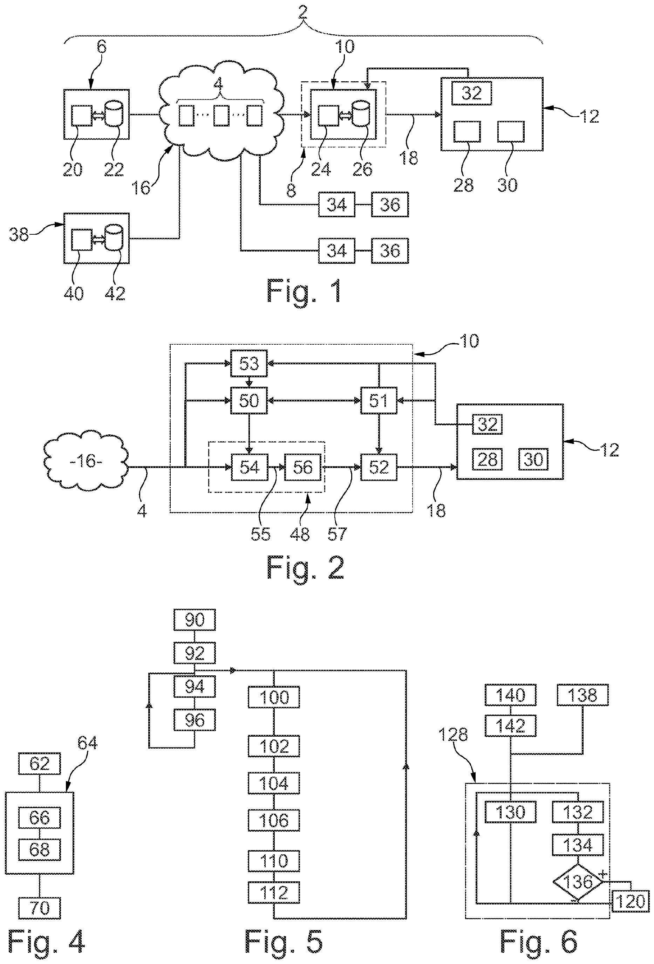

Dans ces figures, les mêmes références sont utilisées pour désigner les mêmes éléments. Dans la suite de cette description, les caractéristiques et fonctions bien connues de l'homme du métier ne sont pas décrites en détail. Le procédé décrit dans la figure 6 est partie intégrante de l'invention.

La figure 1 représente un système 2 de génération et de lecture d'un flux vidéo 4 chiffré et compressé. Le système 2 comporte :
- un générateur 6 du flux vidéo 4,
- un terminal 8 équipé d'un lecteur 10 du flux vidéo 4, et
- un dispositif 12 d'affichage du flux vidéo 4 Iu par le lecteur 10.

Le flux vidéo 4 code une succession temporelle et ordonnée d'images complètes. A partir du flux vidéo 4, le lecteur 10 :
- obtient un premier flux vidéo en bande de base déchiffré et décompressé, puis
- compose, à partir de ce premier flux vidéo, un second flux vidéo en bande de base comportant des images dites « composées »destinées à s'afficher les unes après les autres sur un écran à une fréquence donnée appelée classiquement « fréquence de rafraîchissement ».

Dans ce mode de réalisation, le flux vidéo 4 est une vidéo immersive. Ainsi, typiquement, le flux vidéo 4 est destiné à être affiché par un dispositif d'affichage de réalité virtuelle.

Le flux vidéo 4 est donc une vidéo dans laquelle chaque image complète codée contient simultanément des vues codées de ce qui entoure la caméra dans plusieurs directions différentes. Par exemple, chaque image complète contient des vues prises dans toutes les directions contenues à l'intérieur d'un cône de vision dont le sommet est confondu avec le centre optique de l'objectif de la caméra. Généralement, l'angle α au sommet de ce cône de vision est supérieur à l'angle de vision d'un être humain qui serait situé au même emplacement que la caméra. À cause de cela, chaque image du flux vidéo comporte plus de vues que ce qui peut être perçu, en une seule fois, par un être humain immobile et situé à l'emplacement de la caméra. Typiquement, l'angle α est donc strictement supérieur à 70° ou 80° et, généralement, supérieur à 100° ou 180° ou 260°. Dans le cas où le cône de vision n'a pas une base circulaire, c'est-à-dire qu'il ne s'agit pas d'un cône de révolution, l'angle α est défini comme étant égal à l'angle au sommet du plus petit cône de révolution qui contient entièrement ce cône de vision. Par plus petit cône de révolution, on désigne le cône de révolution qui a le plus petit angle au sommet et dont le sommet est confondu avec le sommet du cône de vision.

Lorsque l'angle α est égal à 180°, l'image est souvent appelée « image hémisphérique ». L'angle α peut aussi être égal à 360°. Dans ce cas, chaque image contient les vues prises dans toutes les directions de l'espace. On parle alors souvent d'images à 360° ou d'images omnidirectionnelles.

La caméra utilisée pour filmer et enregistrer une vidéo immersive comporte par exemple plusieurs objectifs simultanément pointés dans des directions différentes et/ou des objectifs à très grands angles d'ouverture, c'est-à-dire des objectifs dont l'angle d'ouverture est supérieur à 100° ou 160° ou 180°.

Le générateur 6 est raccordé au terminal 8, par exemple, par l'intermédiaire d'un réseau 16 de transmission d'informations tel que le réseau Internet. Le générateur 6 peut être une tête de réseau de diffusion ou un serveur de vidéos.

Le générateur 6 comporte un microprocesseur électronique 20 programmable raccordé à une mémoire 22. Le microprocesseur 20 est capable d'exécuter les instructions enregistrées dans la mémoire 22. Ici, la mémoire 22 comporte les instructions nécessaires pour mettre en œuvre le procédé de la figure 4.

Le terminal 8 commande le dispositif 12 pour afficher le flux vidéo qu'il lit. Dans ce mode de réalisation, le dispositif 12 est considéré comme étant un élément extérieur au terminal 8.

Le lecteur 10 déchiffre et décompresse le flux vidéo 4 puis compose à partir du flux vidéo déchiffré et décompressé un flux vidéo 18 en bande de base.

Typiquement, un flux vidéo en bande de base est principalement constitué par des blocs de bits successifs qui codent chacun la couleur d'un pixel respectif. C'est la position du bloc de bits à l'intérieur du flux vidéo 18 qui code la position du pixel correspondant. Par exemple, le flux vidéo 18 est conforme au format HDMI (« High Définition Multimedia Interface ») ou similaire. Si nécessaire, le flux vidéo 18 peut être chiffré conformément au standard HDCP (« High-Bandwidth Digital Content Protection »). La liaison entre le lecteur 10 et le dispositif 12 est une liaison courte distance, c'est-à-dire une distance généralement inférieure à 30 m ou 20 m ou 10 m. Par la suite, le flux vidéo 18 est dit en clair car il n'a plus besoin d'être déchiffré par le lecteur 10 pour pouvoir être affiché, par le dispositif 12, sous une forme directement intelligible.

Le lecteur 10 comporte un microprocesseur électronique 24 programmable raccordé à une mémoire 26. Le microprocesseur 24 est capable d'exécuter les instructions enregistrées dans la mémoire 26. Ici, la mémoire 26 comporte des instructions nécessaires pour la mise en œuvre des procédés des figures 5 et 6.

Le dispositif 12 est ici tout visiocasque ou casque de réalité virtuelle ou HDM (pour « Head Mounted Display », en anglais) permettant d'obtenir un affichage stéréoscopique. À cet effet, le dispositif 12 comporte notamment deux écrans 28 et 30 placés, respectivement, en face des yeux droit et gauche de l'utilisateur. Le dispositif 12 comporte aussi un ensemble 32 de capteurs capables de mesurer une ou plusieurs grandeurs physiques représentatives d'un comportement de l'utilisateur. Cet exemple de réalisation est décrit par la suite dans le cas particulier où le comportement de l'utilisateur est une position et/ou un déplacement de l'utilisateur qui porte ce dispositif 12. Ici, à titre d'exemple, le comportement de l'utilisateur qui permet de faire varier le flux vidéo est la direction dans laquelle le regard de l'utilisateur pointe. Les capteurs de l'ensemble 32 permettent donc notamment de construire au moins une donnée caractéristique de la direction dans laquelle le regard de l'utilisateur pointe. Par exemple, l'ensemble 32 comporte à cet effet des capteurs qui mesurent le déplacement de la tête de l'utilisateur et/ou des pupilles de l'utilisateur. Ici, cet ensemble 32 comporte pour cela un accéléromètre tri-axe apte à mesurer l'accélération du dispositif 12 dans trois directions orthogonales les unes aux autres notées, respectivement, X, Y et Z. L'ensemble 32 est raccordé au lecteur 10.

Dans ce mode de réalisation, le système 2 comporte plusieurs autres terminaux 34 capables chacun de lire le flux vidéo 4 de la même façon que le terminal 8. A cet effet, chacun des terminaux 34 est raccordé au réseau 16 et associé à son propre dispositif 36 d'affichage. Pour simplifier la description, on considère ici que ces terminaux 34 et dispositifs 36 sont identiques, respectivement, au terminal 8 et au dispositif 12. Pour simplifier la figure 1, seuls deux terminaux 34 et deux dispositifs 36 ont été représentés. Toutefois, en pratique, le nombre de terminaux 34 et dispositifs 36 est bien plus élevé. Par exemple, le nombre de terminaux 34 est supérieur à dix, cent, mille ou 10 000.

Enfin, le système comporte un serveur 38 d'agrégation capable d'échanger des informations aussi bien avec le terminal 8 que les autres terminaux 34. A cet effet, il est raccordé au réseau 16. Le serveur 38 comporte un microprocesseur électronique 40 programmable raccordé à une mémoire 42. Le microprocesseur 40 est capable d'exécuter les instructions enregistrées dans la mémoire 42. Ici, la mémoire 42 comporte des instructions nécessaires pour mettre en œuvre le procédé des figures 5 et 6.

Par la suite, le mode de réalisation du système 2 est décrit dans le cas particulier où :
- le flux vidéo 4 est codé conformément à la norme H.265, également connue sous le terme de HEVC (« High Efficiency Video Coding »),
- la couche de transport est conforme à la norme ISOBMFF (« ISO Base Media File Format »), et
- le chiffrement/déchiffrement du flux vidéo est conforme à la norme CENC (« Common Encryption Scheme »).

Pour plus d'informations sur la norme H.265, le lecteur peut se référer aux documents ISO/CEI 23008-2 et UIT-H.265 publiés en avril 2015 ou leurs versions ultérieures. Pour plus d'informations sur la norme ISOBMFF, le lecteur peut se référer au document ISO/CEI 14496-12 publié en décembre 2015. Pour plus d'informations sur la norme CENC, le lecteur peut se référer au document ISO/CEI 23001-7 seconde édition ou leurs versions ultérieures.

Ces normes étant connues de l'homme du métier, les principes de fonctionnement et les différentes possibilités d'implémentation qu'offrent ces normes ne sont pas décrites ici en détail. Seule la façon particulière d'utiliser et d'implémenter ces normes pour générer et lire le flux vidéo 4 est décrite ici. La terminologie utilisée dans cette description est la même que celle définie dans ces normes.

La figure 2 représente sous forme de modules fonctionnels l'architecture du lecteur 10. Les différents modules représentés sur cette figure peuvent chacun être implémentés soit sous forme logicielle à l'aide du microprocesseur 24 et de la mémoire 26 soit sous la forme d'un composant matériel spécifique supplémentaire. Le lecteur 10 comporte :
- un module 48 de déchiffrement et de décompression du flux vidéo 4,
- un agent DRM (« Digital Right Management ») 50 apte à acquérir, vérifier, gérer et stocker des informations secrètes comme les clés et les droits d'accès nécessaires au déchiffrement du flux vidéo 4 reçu,
- un positionneur 51 qui établit les coordonnées d'un point d'intérêt en fonction des mesures des capteurs de l'ensemble 32,
- un composeur 52 chargé de construire le flux vidéo 18 en fonction des coordonnées établies par le positionneur 51 et des images du flux vidéo déchiffré et décompressé, et
- un analyseur 53 de comportements apte à détecter un comportement anormal de l'utilisateur et, en réponse, à déclencher l'exécution d'une contre-mesure qui rend plus difficile l'obtention d'une copie complète du flux vidéo déchiffré et décompressé à partir du flux vidéo 18.

Le module 48 comporte :
- un sous-module 54 de déchiffrement qui déchiffre le flux vidéo 4 à l'aide des clés de déchiffrement qui lui sont transmises par l'agent DRM 50 afin d'obtenir un flux vidéo 55 déchiffré, et
- un codec 56 (codeur - décodeur) qui décompresse le flux vidéo 55 pour obtenir un flux vidéo 57 déchiffré et décompressé , également dit en clair et en bande de base.

Le composeur 52 est typiquement implémenté dans une unité électronique de traitement graphique dédiée plus connue sous l'acronyme GPU (« Graphical Processor Unit »).

L'analyseur 53 est ici raccordé à la fois à l'ensemble 32 de capteurs et au réseau 16, pour acquérir des mesures représentatives ou données caractéristiques, aussi bien du comportement de l'utilisateur du terminal 10 que des comportements des utilisateurs des autres terminaux 34. L'analyseur 53 est aussi raccordé à l'agent DRM 50 et au positionneur 51 pour déclencher, si nécessaire, l'exécution par ces composants d'une contre-mesure.

Le fonctionnement habituel des différents composants du lecteur 10 est connu et décrit dans les normes citées ci-dessus. Ainsi, par la suite, seul le fonctionnement de ces composants spécifique à la lecture du flux vidéo 4 est décrit en détail. Ici, ce fonctionnement est décrit en référence aux figures 5 et 6.

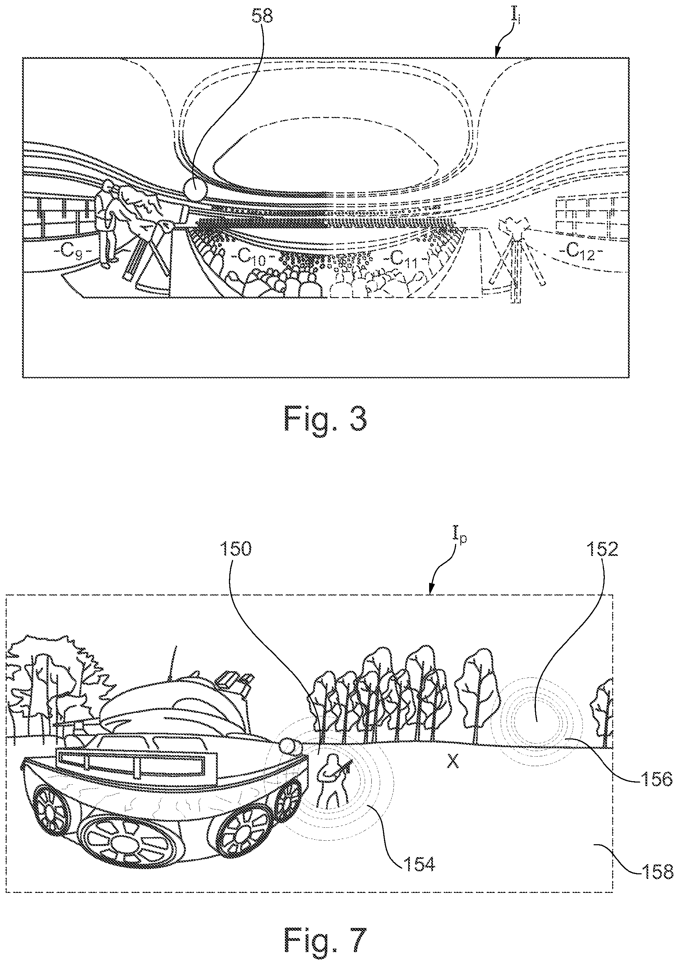

La figure 3 représente une image complète Iᵢ du flux vidéo 57. Le point 58 représenté sur cette image Iᵢ correspond au point vers lequel l'utilisateur pointe son regard. Ce point 58 est appelé par la suite « point d'intérêt ».

Le fonctionnement du générateur 6 est maintenant décrit en référence au procédé de la figure 4.

Lors d'une étape 62, le générateur 6 reçoit un flux vidéo initial à compresser et à chiffrer. Par exemple, pour cela, le générateur 6 est raccordé à une caméra ou à un support d'enregistrement d'informations sur lequel le flux vidéo initial est enregistré, ou raccordé à un réseau sur lequel il lui est transmis. A cet instant, le flux vidéo reçu contient à lui seul toutes les informations nécessaires pour être affiché sur un écran sous une forme directement intelligible par un être humain. En particulier, pour obtenir cet affichage, il n'est pas nécessaire de combiner les images en clair avec une information secrète comme une clef de déchiffrement.

Lors d'une étape 64, le générateur 6 découpe le flux vidéo en groupes d'images fermés. Ensuite, pour chaque groupe d'images fermé, il exécute les opérations suivantes :
- une opération 66 de compression du groupe d'images fermé, puis
- une opération 68 de chiffrement avec une clé de chiffrement K_{C} du groupe d'images compressé pour obtenir un groupe d'images compressé et chiffré.

Enfin, lors d'une étape 70, les groupes d'images compressés et chiffrés sont assemblés les uns avec les autres pour former le flux vidéo 4.

À l'issue de cette étape 70, le flux vidéo 4 est soit transmis au fur et à mesure de sa génération au terminal 8 et aux autres terminaux 34 à travers le réseau 16, soit enregistré dans un fichier dans la mémoire 22. Le premier mode de transmission correspond à une transmission connue sous le terme de diffusion (« broadcasting » en anglais), dans lequel la transmission du flux vidéo 4 débute avant que tous les groupes d'images de ce flux vidéo aient été compressés et chiffrés. Par exemple, un tel premier mode de transmission est plus précisément une transmission en continu ou en transit (« streaming » en anglais), dans le cas d'un mode de diffusion de point à point sur Internet. À l'inverse, le second mode de transmission correspond à une transmission connue sous le terme de « téléchargement » (« downloading » en anglais) dans lequel la transmission du fichier vers le terminal 8 et les autres terminaux 34 ne peut commencer qu'après que toutes les images du flux vidéo initial aient été acquises, compressées et chiffrées.

Le fonctionnement du terminal 8 va maintenant être décrit en référence au procédé de la figure 5.

Initialement, lors d'une étape 90, l'agent DRM 50 acquiert une clé de déchiffrement K_{D} nécessaire pour déchiffrer les groupes d'images compressés et chiffrés du flux vidéo 4.

Lors d'une étape 92, le lecteur 10 reçoit le flux vidéo 4 transmis en continu ou téléchargé à travers le réseau 16.

Lors d'une étape 94, les capteurs de l'ensemble 32 mesurent une ou plusieurs grandeurs physiques représentatives du comportement de l'utilisateur du terminal 12 et le lecteur 10 collecte ces mesures. Ici, ces mesures sont notamment collectées par le positionneur 51 et l'analyseur 53.

En réponse, lors d'une étape 96, le positionneur 51 construit les coordonnées, dans le plan des images, du point d'intérêt 58. Pour cela, ces coordonnées sont construites à partir des mesures collectées et, par exemple, à partir des mesures de l'accéléromètre tri-axe. Les coordonnées du point 58 sont des données caractéristiques du comportement de l'utilisateur.

Pendant toute la durée de lecture du flux vidéo 4, les étapes 94 et 96 sont réitérées en boucle. Par exemple, ces étapes sont réitérées avec une fréquence supérieure à la fréquence de rafraîchissement des images sur les écrans 28 et 30. Ainsi, le positionneur 51 fournit en permanence des coordonnées à jour du point 58.

En parallèle, lors d'une étape 100, avant la lecture de chaque groupe d'images, l'agent DRM 50 détermine s'il est autorisé à déchiffrer ce groupe d'images. L'agent DRM 50 détermine s'il est autorisé à déchiffrer sans restriction le groupe d'images par exemple à partir des droits d'accès qui lui ont été préalablement fournis.

Dans le cas où l'agent DRM 50 est autorisé à déchiffrer le groupe d'images, il procède alors à une étape 102 lors de laquelle l'agent DRM 50 fournit la clé de déchiffrement K_{D} au sous-module 54 de déchiffrement.

En réponse, lors d'une étape 104, le sous-module 54 déchiffre, à l'aide de la clé K_{D} fournie, le groupe d'images compressé et chiffré pour obtenir un groupe d'images compressé et déchiffré.

Ensuite, lors d'une étape 106, le codec 56 décompresse le groupe d'images compressé obtenu à l'issue de l'étape 104. Le codec 56 obtient alors un groupe d'images décompressé et déchiffré.

Les étapes 100 à 106, sont réitérées pour chaque groupe d'images du flux vidéo 4. L'ensemble des groupes d'images décompressés et déchiffrés forme le flux vidéo 57 transmis au composeur 52.

Ensuite, lors d'une étape 110, le composeur 52 compose le flux vidéo 18 à partir du flux vidéo 57 et des coordonnées du point d'intérêt 58 transmises par le positionneur 51. Plus précisément, dans ce mode de réalisation, à partir de chaque image complète Iᵢ du flux vidéo 57, il compose deux fractions d'image, respectivement, pour les yeux droit et gauche de l'utilisateur. À cet effet, il utilise les coordonnées du point 58 qui lui sont transmises par le positionneur 51 et la position connue ainsi que les dimensions connues des écrans 28 et 30. Typiquement, ces deux fractions d'image sont chacune quatre ou dix fois plus petite que l'image complète Iᵢ contenue dans le flux vidéo 57. De plus, ces fractions d'image sont centrées sur le point 58. Ainsi, le flux vidéo 18 contient seulement une fraction de chaque image complète du flux vidéo 57.

Enfin, lors d'une étape 112, le composeur 52 transmet, par l'intermédiaire du flux vidéo 18, les fractions d'image composées, et le dispositif 12 les affiche sur les écrans 28 et 30.

Les étapes 110 et 112 sont réitérées pour chaque image complète du groupe d'images en cours de traitement du flux vidéo 57.

Pour reconstruire l'image complète Iᵢ, comme décrit dans l'introduction de cette demande, une attaque connue consiste à assembler les fractions de l'image Iᵢ contenues dans différents exemplaires du flux vidéo 18. Ces différents exemplaires du flux vidéo 18 sont obtenus avec des coordonnées différentes du point 58.

Dans le cas où, lors de l'étape 100, l'agent DRM 50 établit qu'il n'est pas autorisé à déchiffrer le groupe d'images, il inhibe l'étape 102. En conséquence, et selon l'implémentation du système, les étapes 104 et 106, puis, pour chaque image complète du groupe d'images en cours de traitement, les étapes 110 et 112, sont chacune, ou bien également inhibée, ou bien mise en œuvre avec une entrée incorrecte issue d'un groupe d'images chiffré. Elles aboutissent ainsi à l'interruption de l'affichage des images du groupe d'images complètes en cours de traitement, ou à leur affichage sous une forme inintelligible, c'est-à-dire à l'interdiction de l'accès à ces images.

Le fonctionnement de l'analyseur 53 pour détecter un comportement anormal de l'utilisateur va maintenant être décrit en référence au procédé de la figure 6.

L'analyseur 53 exécute en permanence une phase 128 de diagnostic des comportements de l'utilisateur pour détecter des comportements anormaux.

Pour cela, lors d'une étape 130, en parallèle de l'étape 110 pour chaque image complète du groupe d'images en cours de traitement du flux 57, l'analyseur 53 collecte les mesures des capteurs de l'ensemble 32 ainsi que les coordonnées du point 58 établies par le positionneur 51. Par la suite, les mesures collectées et les coordonnées collectées du point 58 sont appelées collectivement « données collectées ».

Lors de cette étape 130, le lecteur 10 transmet également les données collectées au serveur 38 par l'intermédiaire du réseau 16. Plus précisément, les données collectées sont chacune associées à un identifiant d'une image correspondante du flux vidéo. L'image correspondante est l'image composée à partir de ces données collectées lors de l'étape 110. Par exemple, les données collectées sont horodatées, c'est-à-dire associées à une date qui permet de repérer dans le flux vidéo joué, l'image traitée par le composeur à l'instant de collecte de ces données collectées.

En parallèle, lors d'une étape 132, l'analyseur 53 construit, à partir des données collectées, une ou plusieurs données caractéristiques du comportement de l'utilisateur en plus de celle déjà construite par le positionneur 51.

Ensuite, lors d'une étape 134, l'analyseur 53 utilise différentes techniques pour détecter un comportement anormal à partir des données caractéristiques construites. Lors de cette étape 134, à chaque fois qu'un comportement anormal est détecté, il est signalé. Par exemple, dans ce mode de réalisation, toutes les techniques de détection décrites ci-dessous sont concomitamment mises en œuvre par l'analyseur 53 pour tendre à limiter le nombre de faux positifs. Un faux-positif correspond au cas où un comportement anormal est détecté, alors que le comportement de l'utilisateur est normal. L'exécution d'une contre-mesure est alors déclenchée, et l'utilisateur ainsi inopportunément pénalisé dans son expérience du service, ce qui doit être autant que possible évité. Les différentes techniques de détection décrites ici sont classées en trois familles distinctes :
- une première famille qui regroupe des techniques dites « de détection initiale » qui utilise directement et seulement les données collectées par le terminal 8 auprès des capteurs de l'ensemble 32 du dispositif 12,
- une deuxième famille de techniques dites « de classification » qui utilisent un classifieur pour discriminer un comportement anormal d'un comportement normal, et
- une troisième famille de techniques dites « de consolidation » qui utilisent des données collectées par les autres terminaux 34.

Ci-dessous des exemples de techniques dans ces trois familles sont décrits.

### Techniques de détection initiale :

Une première technique de détection initiale consiste à construire, à partir des données collectées, une donnée caractéristique ID1 qui caractérise une propriété physique de la vitesse ou de l'accélération mesurée d'un déplacement de l'utilisateur. Cette donnée ID1 est construite à partir des données collectées pendant un intervalle de temps prédéterminé T1. Typiquement, l'intervalle T1 est compris entre 3 s et 30 s. Par exemple, la donnée ID1 est l'accélération moyenne du déplacementdu dispositif 12 pendant l'intervalle T1, construite à partir des mesures de l'accéléromètre tri-axe. Ensuite l'analyseur 53 compare la donnée ID1 à un seuil S₁ prédéterminé. Ce seuil S₁ est faible, c'est-à-dire inférieur à 0,1 m/s² ou 0,05 m/s². Ensuite, selon cette première technique de détection initiale, l'analyseur 53 détecte un comportement anormal si la donnée caractéristique ID1 reste inférieure à ce seuil S₁ pendant une durée prédéterminée supérieure à 15 s ou 1 min ou 5 min. En effet, un être humain peut très difficilement rester parfaitement immobile ou se déplacer à une vitesse parfaitement constante pendant une telle durée. Ainsi, un déplacement à vitesse parfaitement constante, ou une immobilité parfaite, pendant cette durée prédéterminée, est un comportement anormal.

Les différents seuils prédéterminés décrits ici sont calibrés au préalable de manière à pouvoir discriminer un comportement normal d'un comportement anormal. Pour cela, on utilise typiquement des jeux de valeurs des données caractéristiques construites lorsque le terminal est utilisé par un être humain et lorsqu'il est commandé par un automate. La comparaison de ces différents jeu de valeurs permet facilement à un homme du métier de calibrer correctement les seuils prédéterminés.

Selon une deuxième technique de détection initiale, la donnée ID1 est construite comme décrit ci-dessus. Ensuite, cette donnée ID1 est comparée à un seuil S₂ prédéterminé. Ce seuil S₂ est élevé. Par exemple, le seuil S₂ est supérieur à 20 m/s² ou 50 m/s². Ensuite, l'analyseur 53 détecte un comportement anormal si la donnée ID1 reste supérieure à ce seuil S₂ pendant une durée prédéterminée supérieure à 1 s ou 2 s ou 5 s. En effet, à cause des limitations physiologiques d'un corps humain, le déplacement de la tête d'un être humain ne peut pas franchir ce seuil. À l'inverse, un automate peut le faire sans difficulté. Ainsi, le franchissement de ce seuil S₂ par la donnée ID1 est un comportement anormal.

Selon une troisième technique de détection initiale, une donnée caractéristique ID2 est construite par l'analyseur 53. Cette donnée caractéristique ID2 est l'écart-type ou la variance des accélérations mesurées par l'accéléromètre tri-axe pendant une durée prédéterminée. L'analyseur 53 compare ensuite la donnée ID2 à un seuil S₃ prédéterminé. Le seuil S₃ est choisi petit de manière à discriminer les déplacements normaux de déplacement anormaux. En effet, les déplacements d'un être humain ne sont jamais parfaitement réguliers et constants. Ils ne correspondent donc presque jamais à une accélération parfaitement constante. Par exemple, la valeur du seuil S₃ est inférieure à 0,1 m/s⁻² ou inférieure à 0,05 m/s⁻². Si la valeur de la donnée ID2 est inférieure au seuil S₃, l'analyseur 53 signale un comportement anormal.

Selon une quatrième technique de détection initiale, l'analyseur 53 construit à partir des mesures collectées de l'accélération pendant une période de temps assez longue une donnée caractéristique ID3. La donnée ID3 caractérise la périodicité des déplacements de l'utilisateur pendant cette période de temps. Cette période de temps est supérieure à 5 min ou 10 min ou 1 h. Ensuite, la valeur de la donnée ID3 est comparée à un seuil S4 prédéterminé. Si le seuil S₄ est franchi, l'analyseur 53 signale un comportement anormal. En effet, un déplacement répété régulièrement n'est généralement pas un déplacement normal. Par exemple, l'analyseur 53 construit la densité spectrale des mesures de l'accéléromètre tri-axe mesurées pendant cette période de temps. Ensuite, l'analyseur 53 compare la hauteur du plus haut pic de cette densité spectrale au seuil S₄. Si le seuil S₄ est franchi, l'analyseur 53 signale un comportement anormal.

### Techniques de classification :

Selon une première technique de classification, l'analyseur 53 implémente et exécute un classifieur à apprentissage supervisé capable de comparer automatiquement un jeu de données caractéristiques construites à des seuils prédéterminés pour classer le comportement actuel de l'utilisateur, soit dans la classe des comportements normaux, soit dans la classe des comportements anormaux. Les seuils prédéterminés utilisés par ce classifieur sont obtenus en l'entraînant, lors d'une phase 138 préalable d'apprentissage supervisé sur des jeux préenregistrés de données caractéristiques pour lesquelles la classification entre comportement anormal et comportement normal est connue. Ces jeux de données caractéristiques comportent donc au moins :
- un jeu de données caractéristiques construites lorsque les données collectées sont générées par un être humain en train d'utiliser un terminal tel que le terminal 8, et
- un jeu de données caractéristiques construites lorsque les données collectées sont générées par un être humain ou par un automate pour contribuer à obtenir une copie complète d'un flux vidéo 57.

De tels classifieurs sont bien connus de l'homme du métier et ne seront donc pas décrits plus en détail ici. Par exemple, le classifieur implémenté par l'analyseur 53 est un classifieur linéaire tel qu'un classifieur Baysien naïf ou une machine à vecteur support ou SVM (« support vector machine ») ou un réseau de neurones.

De préférence, pour limiter le nombre de données traitées par le classifieur, celui-ci ne traite pas directement les données collectées mais des données caractéristiques construites par l'analyseur 53 à partir des mesures collectées. Par exemple, les données caractéristiques utilisées par le classifieur sont les suivantes :
- les moyennes des accélérations mesurées dans chacune des directions X, Y et Z, pendant une durée prédéterminée,
- les variances des accélérations mesurées dans chacune des directions X, Y et Z pendant une durée prédéterminée,
- l'énergie du signal de l'accélération mesurée sur chaque axe X, Y et Z pendant une durée prédéterminée,
- l'entropie de l'accélération mesurée dans chacune des directions X, Y et Z pendant une durée prédéterminée, et
- les coefficients de corrélation entre les mesures collectées pour chacune des directions X, Y et Z.

Bien évidemment, dans ce cas, la phase d'apprentissage supervisée est elle aussi réalisée en utilisant les mêmes données caractéristiques.

### Techniques de consolidation :

Les techniques de consolidation nécessitent la mise en œuvre d'une étape 140, préalable à l'étape 134, lors de laquelle les autres terminaux 34 lisent le même flux vidéo 4. Par exemple, à cet effet, le procédé décrit en référence aux figures 5 à 6 est exécuté par chacun des terminaux 34. En conséquence, le serveur 38 dispose d'une base de données associant à chaque image du flux vidéo 57 les données collectées par ces autres terminaux 34. A partir de cette base de données, lors d'une étape 142, le serveur 38 construit des données statistiques auxquelles les données caractéristiques construites localement par le terminal 8 peuvent être comparées pour détecter un comportement anormal.

Selon une première technique de consolidation, à partir des données collectées auprès des autres terminaux 34, le serveur 38 établit, lors d'une étape 142, des premières données statistiques. Ici, ces premières données statistiques sont des seuils que les valeurs des données collectées ont très peu de chance de franchir si le comportement de l'utilisateur est normal. Par « très peu de chance », on désigne ici une probabilité inférieure à une chance sur cent ou sur mille ou sur 10 000. Ensuite, le serveur 38 transmet ces seuils au terminal 8 avant ou au cours du jeu du flux vidéo 4 par le terminal 8. En réponse, l'analyseur 53 compare à ces seuils reçus les données collectées localement pendant que la même fraction du flux vidéo est lue. Si l'un de ces seuils est franchi, l'analyseur 53 signale alors un comportement anormal. La transmission des valeurs ainsi établies de ces seuils au terminal 8 avant que celui-ci commence à lire le flux vidéo 4 n'est possible que dans le cas où le flux vidéo 4 est un flux vidéo pré-enregistré et transmis à la demande. À l'inverse, la transmission des valeurs établies de ces seuils au cours du jeu du flux vidéo 4 par le terminal 8 est possible aussi bien pour un flux vidéo pré-enregistré et transmis à la demande que pour un flux vidéo diffusé en direct (« live », en anglais).

Par exemple, à partir de l'accélération collectée et prise en compte, par chacun des terminaux 34, pour la composition des fractions d'images du flux vidéo 18 à partir d'une même image complète du flux vidéo 57, le serveur 38 construit la distribution statistique de cette accélération collectée. Ensuite, il en déduit les valeurs de seuils Sₘᵢₙ et Sₘₐₓ entre lesquels sont situées 99% des accélérations collectées. Ces seuils Sₘᵢₙ et Sₘₐₓ sont alors transmis au terminal 8. Le terminal 8 compare alors aux seuils Sₘᵢₙ et Sₘₐₓ l'accélération collectée localement pendant la lecture ce cette fraction du flux vidéo 4. Si l'un des seuils Sₘᵢₙ et Sₘₐₓ est franchi par l'accélération collectée localement, l'analyseur signale un comportement anormal. Cette première technique de consolidation permet d'ajuster dynamiquement la valeur des seuils prédéterminés en fonction de comportements d'utilisateurs mesurés par les terminaux 34.

Selon une deuxième technique de consolidation, le serveur 38 construit à partir des données collectées auprès des terminaux 34, des deuxièmes données statistiques nécessaires à la mise en œuvre d'un algorithme de détection d'anomalie. Cette famille d'algorithme est connue sous le terme anglais de « anomaly détection » ou « outlier détection ». Ensuite, les deuxièmes données statistiques ainsi construites sont transmises à l'analyseur 53 du terminal 8. L'analyseur 53 compare alors les données caractéristiques construites localement aux deuxièmes données statistiques reçues pour détecter un comportement anormal. Plus précisément, lors de cette étape de comparaison, un écart entre les données caractéristiques locales et les deuxièmes données statistiques est comparé à un seuil prédéterminé. Ensuite, c'est le franchissement de ce seuil prédéterminé par cet écart qui déclenche la détection d'un comportement anormal.

À titre d'illustration, l'algorithme de détection d'anomalie est un algorithme de la famille connue sous l'expression « cluster-based Local Outlier » tel que l'algorithme LOF (« Local Outlier Factor ») ou FindCBLOF.

La figure 7 représente un exemple de deuxièmes données statistiques construites par le serveur 38 à partir des données collectées auprès des terminaux 34. Dans cet exemple, les données collectées sont les coordonnées du point 58 associées à une image particulière I_{P} du flux vidéo 4. La figure 7 représente cette image I_{P}. Les deuxièmes données statistiques construites se présentent ici sous la forme d'une cartographie qui associe à chaque pixel de l'image I_{P} une probabilité que la direction du regard de l'utilisateur pointe vers ce pixel. Par exemple, cette probabilité est le nombre de fois où, lorsque cette image I_{P} est lue, l'utilisateur pointe son regard vers ce pixel. Autrement dit, pour chaque pixel de l'image I_{P}, le serveur 38 dénombre le nombre de fois où les coordonnées du point 58 collectées correspondent à ce pixel. Le serveur 38 construit ainsi une cartographie associant à chaque pixel une probabilité que ce pixel soit regardé par l'utilisateur. Cette cartographie permet, par exemple, d'identifier les zones de l'image I_{P} les plus regardées par les utilisateurs. À titre d'illustration, sur la figure 7, deux zones 150, 152 les plus regardées par les utilisateurs, sont entourées. Cette cartographie permet aussi d'identifier les zones de l'image I_{P} moins souvent regardées et des zones de l'image I_{P} qui ne sont pas ou presque pas regardées par les utilisateurs. La figure 7 représente deux zones 154 et 156 moins souvent regardées. Ici, ces deux zones 154 et 156 entourent, respectivement, les zones 150 et 152. La zone 158 de l'image I_{P}, située en dehors des zones 150 à 156, constitue ici une zone qui n'est pas ou presque pas regardée par les utilisateurs.

Ensuite, cette cartographie associée à l'image I_{P} est transmise à l'analyseur 53. Lorsque l'image I_{P} est traitée par le composeur 52, l'analyseur 53 collecte les coordonnées du point 58 établies par le positionneur 51 à cet instant là. Ces coordonnées collectées sont ensuite comparées à la cartographie reçue. Ici, cette comparaison consiste à calculer la distance la plus courte qui sépare les coordonnées du point 58 des zones les plus regardées. Si cette distance dépasse un seuil prédéterminé, un comportement anormal est détecté. Dans le cas contraire, aucun comportement anormal n'est détecté. Par exemple, l'algorithme LOF est mis en œuvre pour exécuter cette comparaison.

Avantageusement, l'analyseur 53 peut aussi mettre en œuvre un filtre pour limiter les détections intempestives de comportements anormaux. Par exemple, un comportement anormal est détecté seulement si la distance calculée dépasse le seuil prédéterminé pour P images consécutives ou dix fois en moins de M minutes. Par exemple, P est compris entre 4 et 20 et M est compris entre 3 et 30 min. Ici, P est égal à 5 et M est égal à 5 min.

Après l'étape 134, l'analyseur 53 procède à une étape 136 lors de laquelle il exécute un algorithme de décision. L'exécution de cet algorithme permet de décider si, en réponse aux résultats des détections mises en œuvre, l'exécution d'une contre-mesure doit être déclenchée et, si oui, laquelle. Avantageusement, pour prendre cette décision, l'analyseur 53 tient compte des résultats des détections mises en œuvre à l'intérieur d'une fenêtre temporelle glissante ΔT. Il tient en particulier compte des comportements anormaux détectés et des techniques de détection utilisées pour détecter chaque comportement anormal. La fenêtre glissante ΔT précède immédiatement le déclenchement de l'étape 136 en cours. Par exemple, la fenêtre ΔT a une durée supérieure à 1 min ou 5 min ou 15 min et inférieure à 1 h.

À titre d'illustration, lors de l'étape 136, l'analyseur 53 calcule une note globale à partir du nombre de comportements anormaux détectés pendant la fenêtre ΔT. Lors du calcul de cette note, un coefficient de pondération peut être appliqué au nombre de comportements anormaux détectés par une technique de détection particulière pour accorder plus d'importance à certaines techniques de détection par rapport à d'autres. Par exemple, ces coefficients de pondération sont utilisés ici pour accorder plus d'importance aux techniques de consolidation décrites ci-dessus par rapport aux techniques de détection initiale et aux techniques de classification.

Ensuite, l'analyseur 53 compare la note globale calculée à au moins un seuil prédéterminé. Si ce seuil est franchi, l'analyseur 53 déclenche la mise en œuvre d'une étape 120 d'exécution de contre-mesure. A cet effet, selon la nature d'une contre-mesure à exécuter, l'analyseur 53 envoie une instruction de déclenchement au module en charge de cette exécution, ou la déclenche lui-même.

Lors de l'étape 120, le lecteur 10 exécute une contre-mesure qui a pour effet de rendre plus difficile l'obtention d'une copie compète du flux vidéo 57 à partir de différents exemplaires du flux vidéo 18.

De nombreuses contre-mesures peuvent être exécutées pour atteindre ce résultat.

Par exemple, une première contre-mesure consiste à commander le dispositif 12 d'affichage pour qu'il joue un CAPTCHA^{™}, c'est-à-dire par exemple qu'il affiche le CAPTCHA^{™} au dessus des fractions d'images du flux vidéo 18 et, simultanément, à interrompre la génération du flux vidéo 57. Dans un autre exemple, la contre-mesure consiste d'abord à seulement commander le dispositif 12 pour qu'il joue un CAPTCHA^{™} au dessus des fractions d'images du flux vidéo 18, puis, seulement si une réponse correcte de l'utilisateur au CAPTCHA^{™} n'est pas acquise avant l'expiration d'un délai prédéterminé à compter du début du jeu du CAPTCHA^{™}, à interrompre la génération du flux vidéo 57. Par exemple, pour interrompre la génération du flux vidéo 57, l'agent 50 interrompt la transmission de la clé K_{D} de déchiffrement au sous-module 54 de déchiffrement. Si la réponse acquise de l'utilisateur au CAPTCHA^{™} joué est correcte, alors, le dispositif 12 d'affichage est commandé pour qu'il interrompe le jeu du CAPTCHA^{™}, et l'agent 50 autorise la reprise de la génération du flux vidéo 57 par le module 48 en reprenant la transmission de la clé K_{D} au sous-modile 54. En absence de réponse à ce CAPTCHA^{™} ou en cas de réponse incorrecte, l'agent 50 maintient l'interruption de la génération du flux vidéo 57. Le terme CAPTCHA^{™} est une marque commerciale de l'université Carnegie-Mellon. Il s'agit d'un rétroacronyme qui se prononce comme « capture » en anglais, et est censé être composé des initiales de Completely Automated Public Turing test to tell Computers and Humans Apart, soit en français, test public de Turing complètement automatique ayant pour but de différencier les humains des ordinateurs. Il désigne un test de défi-réponse utilisé en informatique, pour permettre à un ordinateur de s'assurer qu'une réponse à un défi n'est pas générée par un ordinateur. Un CAPTCHA^{™} est typiquement une question ou une énigme jouée par le dispositif 12 et à laquelle un être humain peut facilement répondre alors que, au contraire, il est très difficile pour un automate d'y répondre correctement. Ainsi, cette contre-mesure rend plus difficile la mise en œuvre d'une attaque car elle rend difficile, voire impossible, l'automatisation complète de cette attaque.

Il existe une très grande variété de CAPTCHA^{™} possibles. Par exemple, le CAPTCHA^{™} peut être une image contenant une combinaison de caractères en partie masqués et/ou déformés de manière à rendre très difficile la reconnaissance automatique de ces caractères par un automate. La réponse correcte à ce CAPTCHA^{™} est alors le mot formé par la combinaison de caractères affichés. Dans un autre exemple, le CAPTCHA^{™} est un message audio ou vidéo auquel l'utilisateur doit correctement répondre pour autoriser la reprise de la génération du flux vidéo 57. Par exemple, avantageusement, le CAPTCHA^{™} est un message audio ou vidéo qui demande à l'utilisateur d'adopter un comportement particulier tel que tourner la tête à gauche. La réponse à un tel CAPTCHA^{™} est alors acquise par le terminal 8 à partir des mesures collectées auprès de l'ensemble 32 de capteurs.

Une deuxième contre-mesure consiste à seulement interrompre comme ci-dessus, de façon temporaire ou permanente, la génération du flux vidéo 57.

La troisième contre-mesure consiste à dégrader la qualité du flux vidéo 57 ou 18. Par exemple, l'analyseur 53 commande le module 50, le module 48 et/ou le composeur 52 de manière à diminuer la résolution spatiale ou à dégrader les couleurs des images codées ou à diminuer la fréquence d'échantillonnage des sons codés. Les dégradations appliquées au flux vidéo 57 ou 18 sont telles que, à partir du flux vidéo 57 ou 18 dégradé et sans information supplémentaire, il n'est pas possible de reconstruire le flux vidéo 57 ou 18 non dégradé.

La quatrième contre-mesure est la transmission, par le terminal 8, d'une commande au générateur 6. En réponse à cette commande, le générateur 6 interrompt par exemple la transmission du flux vidéo 4 vers le terminal 8 ou transmet au terminal 8 seulement un flux vidéo 4 dégradé, par exemple, comme décrit au paragraphe précédent. Dans un autre exemple, le générateur 6 interrompt la transmission, au terminal 8, des droits d'accès au flux vidéo 4, ou lui transmet seulement les droits d'accès à un flux vidéo 4 dégradé.

Une cinquième contre-mesure consiste à dégrader les coordonnés du point 58 établies par le positionneur 51. Par exemple, l'analyseur 53 commande le positionneur 51 ou le composeur 52 pour qu'il maintienne ces coordonnées constantes pendant un intervalle de temps prédéterminé et cela quels que soient les déplacements réalisés pendant le même intervalle de temps par l'utilisateur. Cet intervalle de temps prédéterminé peut ou non être limité à la durée de la lecture en cours du flux vidéo 4. Dans ce cas, le flux vidéo 18 n'est plus corrélé, pendant cet intervalle de temps, au comportement de l'utilisateur, ce qui rend très difficile, voire impossible, de déplacer le point 58 à l'endroit souhaité à l'intérieur de l'image. La dégradation des coordonnées du point 58 peut aussi consister à modifier ces coordonnées de façon aléatoire. Il est aussi possible d'appliquer une dégradation prédéterminée des coordonnées du point 58. Par exemple, les coordonnées du point 58 sont modifiées de manière à ce que le point 58 suive un trajet prédéterminé indépendant du comportement de l'utilisateur. Dans un autre exemple, les coordonnées du point 58 sont systématiquement modifiées pour interdire le positionnement du point 58 à l'intérieur de certaines zones prédéterminées des images complètes du flux vidéo 57. Cela empêche le composeur 52 de composer un flux vidéo 18 contenant des informations dans ces zones prédéterminées d'images.

À l'issue de l'étape 120, selon la contre-mesure dont l'exécution est déclenchée, soit le procédé se poursuit par l'exécution des étapes 102 à 112 mais modifiées de manière à mettre en œuvre la contre-mesure déclenchée, soit le procédé s'arrête. Par exemple, le procédé s'arrête si la contre-mesure dont l'exécution a été déclenchée, interdit totalement la génération du flux vidéo 57 ou 18. À l'inverse, le procédé se poursuit si, par exemple, la contre-mesure exécutée consiste simplement à dégrader le flux vidéo 57 ou 18 ou les coordonnées du point 58.

Typiquement, l'analyseur 53 est capable de déclencher l'exécution de plusieurs de ces contre-mesures, soit simultanément, soit en alternance.

Dans le cas où différentes contre-mesures peuvent être exécutées lors de l'étape 120, chacune de ces contre-mesures est par exemple associée à un seuil prédéterminé respectif. Ces différents seuils sont classés par ordre croissant. Dans ce cas, l'instruction transmise par l'analyseur 53 au module en charge du déclenchement de la contre-mesure, peut comporter l'identifiant du seuil le plus élevé franchi. En réponse, lors de l'étape 120, seule la ou les contre-mesures associées à ce seuil prédéterminé sont exécutées. Cela permet d'exécuter seulement les contre-mesures correspondant à la note globale calculée et donc d'exécuter une réponse proportionnée au comportement anormal détecté.

### Variantes du système 2 :

Le dispositif 12 peut être remplacé par un écran et un projecteur qui projette les images du flux vidéo lu sur cet écran. De préférence, la surface de l'écran sera alors une demi-sphère ou une sphère ou un anneau entourant l'utilisateur.

Ce qui a été décrit s'applique à d'autre domaines que l'affichage stéréoscopique. Dans ces cas, le composeur construit par exemple une seule fraction d'image et non pas deux comme précédemment décrit. Par exemple, cela s'applique au cas où l'écran entoure l'utilisateur comme dans le cas d'un écran sphérique ou hémisphérique. Cela s'applique aussi au cas d'un écran plat, dont les dimensions sont telles que l'utilisateur ne peut pas avoir une vision globale de la totalité de sa surface.

L'ensemble 32 ou le dispositif 12 d'affichage peuvent être intégrés à l'intérieur du terminal 8. Ce sera par exemple le cas si le terminal 8 est une tablette ou un smartphone. L'ensemble 32 peut aussi être mécaniquement indépendant du dispositif 12 et du terminal 8.

L'ensemble 32 peut comporter en plus ou à la place d'autres capteurs électroniques que ceux précédemment décrits. Par exemple, l'ensemble 32 peut comporter un ou plusieurs des capteurs électroniques suivants :
- Un ou plusieurs capteurs qui mesurent le déplacement de la tête de l'utilisateur tel qu'un gyroscope ou un magnétomètre fixé sur le casque de réalité virtuelle. La position de la tête peut aussi être mesurée à partir d'images filmées par une caméra immobile qui est mécaniquement indépendante du casque de réalité virtuelle. Dans ce dernier cas, le casque peut comporter des motifs particuliers ou des LED qui aident à déterminer la position de la tête à partir des images filmées par cette caméra.
- Un ou plusieurs capteurs qui mesurent les déplacements des yeux ou des pupilles de l'utilisateur. Là encore, ce capteur peut comporter une caméra qui filme les yeux de l'utilisateur et à partir des images filmées en déduit le déplacement des yeux ou des pupilles.
- Un ou plusieurs capteurs qui mesurent les déplacements d'une autre partie du corps de l'utilisateur, telles que ses mains, ses lèvres, son buste, ses pieds ou autre. Un tel capteur peut comporter à cet effet une caméra qui filme le déplacement de l'utilisateur et une unité d'analyse des images filmées qui détermine le déplacement réalisé par la partie du corps filmée par cette caméra. Le capteur peut aussi être un joystick, un gant instrumenté, un tapis de marche instrumenté, un bouton ou similaire.
- Un capteur qui mesure l'activité neuronale de l'utilisateur, tel qu'un électro-encéphalographe. Dans ce cas, le comportement de l'utilisateur qui fait varier le flux vidéo 18 n'est pas nécessairement une position ou un déplacement de l'utilisateur. En effet, ce type de capteur est également sensible à l'état émotionnel ou psychique de l'utilisateur. Il est aussi possible de déduire une position ou un déplacement de l'utilisateur à partir des mesures d'un tel capteur.
- Un capteur de sons ou de paroles prononcés par l'utilisateur lors de la lecture du flux vidéo. Dans ce cas aussi, le comportement de l'utilisateur qui fait varier le flux 18 n'est pas une position ou un déplacement. Typiquement, le capteur de sons ou de paroles comprend, ou est associé à, un dispositif de reconnaissance vocale qui transforme les sons ou les paroles relevées en commandes exécutables par le composeur 52 pour générer le flux 18.

L'agent DRM 50 peut être implémenté sous une forme matérielle tel qu'un coprocesseur de sécurité ou un processeur d'une carte à puce.

Le système 2 peut être réalisé de manière à être conforme à d'autres normes que celles précédemment citées. Pour des applications particulières, il n'est pas non plus obligatoire que le système 2 soit compatible avec des normes existantes. Par exemple, dans une variante, le flux vidéo est compressé image par image de sorte que chaque groupe d'images ne contient qu'une seule image. Dans une autre variante, le flux vidéo est compressé en un seul bloc, ce qui revient à avoir un seul groupe d'images comportant toutes les images de la vidéo. Enfin, dans une autre alternative, le groupe d'images n'est pas un plus petit groupe d'images fermé.

### Variantes du procédé de lecture :

En variante, le flux vidéo 4 est seulement compressé et non pas chiffré. Dans ce cas, il est toujours possible d'exécuter les contre-mesures décrites ci-dessus pour dégrader le flux vidéo 57 ou interrompre sa décompression. Un tel mode de réalisation présente toujours un intérêt car il rend plus difficile, voire impossible, la reconstruction d'une copie complète du flux vidéo 57 à partir de différents exemplaires du flux vidéo 18 composés par le composeur 51.

Dans un autre mode de réalisation, les contre-mesures ne sont pas associées aux seuils et, par exemple, la détermination de la ou des contre-mesures déclenchées est aléatoire.

Il existe d'autres contre-mesures dont l'exécution peut être déclenchée comme décrit précédemment. Par exemple, comme décrit dans la demande WO2008/134014A2, il est possible de modifier régulièrement un paramètre de diversification des flux vidéo 18 ou 57 en tant que contre-mesure.

Les procédés décrits ici peuvent être mis en œuvre sur toutes les images de la vidéo ou pour une partie seulement de ces images. Par exemple, les procédés décrits ici sont mis en œuvre pendant certains intervalles de temps et désactivés pendant d'autres intervalles de temps.

### Variantes du procédé de détection de comportements anormaux :

L'analyseur 53 peut être implémenté ailleurs que dans le terminal 8. Par exemple, il peut aussi être implémenté à l'intérieur du serveur 38 ou dans un autre serveur distant. Pour cela, les données collectées par le terminal 8 sont transmises au serveur 38. Ensuite, le serveur 38 exécute les étapes 132 à 134 pour détecter un comportement anormal de l'utilisateur du terminal 8, l'étape 136 de décision et, le cas échéant, l'étape 120 d'exécution de contre-mesure. Le cas échéant, l'exécution de la contre-mesure est déclenchée en envoyant une instruction au générateur 6 et/ou au terminal 8. Cette instruction est envoyée au générateur 6 lorsque c'est celui-ci qui exécute la contre-mesure. Par exemple, en réponse à cette instruction, le générateur 6 transmet un message EMM (« Entitlement Management Message ») au terminal 8 qui supprime ou restreint les droits d'accès de ce terminal au flux vidéo 4. Par exemple, le générateur 6 cesse de transmettre au terminal 8 les droits d'accès au flux vidéo 4 ou le flux vidéo 4 lui-même, ce qui rend impossible l'obtention par ce terminal 8 du flux vidéo 57 en clair.

Dans une autre variante, les différentes fonctionnalités de l'analyseur 53 peuvent aussi être implémentées en partie dans le serveur 38 et en partie dans le terminal 8. Par exemple, seules les techniques de détection initiale sont implémentées dans le terminal 8. Les techniques de classification et de consolidation sont seulement implémentées dans le serveur 38.

Le serveur 38 peut aussi être implémenté dans le terminal 8.

Dans une autre variante, l'analyseur 53 ne met en œuvre qu'une seule ou uniquement quelques unes des techniques de détection précédemment décrites. En particulier, dans un mode de réalisation simplifié, les techniques de consolidation ou de classification sont omises. Dans le cas où aucune technique de consolidation n'est mise en œuvre, le serveur 38 peut être omis et, lors de l'étape 130, les données collectées par les terminaux 34 ne sont pas transmises. À l'inverse, dans un mode de réalisation différent, seules une ou plusieurs techniques de consolidation sont mises en œuvre.

L'homme du métier saura, en s'inspirant des nombreux exemples de techniques de détection décrits ci-dessus, développer d'autres techniques de détection. Par exemple, les mêmes données caractéristiques que celles décrites dans le cas de l'accélération du déplacement peuvent aussi être construites pour caractériser des propriétés physiques de la vitesse de déplacement de l'utilisateur. Pour cela, l'analyseur 53 utilise des mesures acquises de la vitesse du déplacement à la place des mesures acquises de l'accélération de ce déplacement. Ensuite, l'analyseur 53 met en œuvre des techniques de détection initiale similaires à celles décrites ci-dessus dans le cas de l'accélération pour détecter un comportement anormal à partir des données caractéristiques de la vitesse.

Comme déjà illustré dans les exemples de réalisation décrits ci-dessus, la comparaison de la donnée caractéristique consiste à tester l'une des inégalités suivantes f(x) < S_{X} ou f(x) > S_{X} ou f(x) ≤ S_{X} ou f(x) ≥ S_{X}, où :
- f est une fonction qui retourne une valeur qui dépend de la donnée caractéristique x, et
- S_{X} est un seuil prédéterminé.

Dans le cas le plus simple, la fonction f est la fonction identité. Toutefois, comme montré dans les exemples précédents, la fonction f peut être une fonction plus complexe comme un classifieur ou une fonction multivariable.

Dans une autre variante, ce sont les données caractéristiques qui sont transmises au serveur 38 et non pas les données collectées. Le fonctionnement du serveur 38 et le déroulement des procédés précédemment décrits doivent alors être adaptés pour tenir compte du fait que ce sont des données caractéristiques qui sont reçues et non pas des données collectées.

Dans une variante simplifiée, la construction d'une donnée caractéristique à partir des mesures collectées consiste simplement à affecter la mesure collectée en tant que valeur de cette donnée caractéristique. Ceci est possible si la donnée caractéristique est identique à la mesure collectée. Par exemple, si la mesure collectée est déjà au moins en partie traitée par le capteur lui-même, alors la valeur de la donnée caractéristique est égale, sans autre traitement supplémentaire pour sa construction, à cette mesure.

Dans un autre mode de réalisation, l'analyseur 53 ne procède à l'étape 136 qu'après un nombre prédéterminé de mises en œuvres de l'étape 134, ou après écoulement d'une durée prédéterminée depuis la précédente mise en œuvre de l'étape 136 ou depuis le début de la lecture du flux vidéo 4.

## Revendications

1. Procédé de lecture d'un flux vidéo, dans lequel un premier terminal :
- collecte (94, 130) au moins une mesure représentative d'un comportement d'un utilisateur du premier terminal pendant la lecture de ce flux vidéo et construit (96, 132) à partir de ladite au moins une mesure collectée au moins une donnée caractéristique de ce comportement de cet utilisateur,
- décompresse (106) le flux vidéo pour obtenir un premier flux vidéo en bande de base qui est indépendant de ladite au moins une mesure collectée, puis
- compose (110), à partir de ladite au moins une donnée caractéristique construite et du premier flux vidéo en bande de base, un second flux vidéo en bande de base qui varie en fonction de ladite au moins une donnée caractéristique construite, le second flux vidéo contenant seulement une fraction de chaque image complète du premier flux vidéo,
- une étape (134) de comparaison de ladite au moins une donnée caractéristique à un ensemble de seuils prédéterminés, chacun desquels, lorsqu'il est franchi, caractérise un comportement anormal de l'utilisateur, puis
- une étape (134) de signalement d'un comportement anormal si au moins une partie prédéterminée de ces seuils est franchie, et, sinon, l'absence de ce signalement d'un comportement anormal, puis
- une étape (120) d'exécution d'une contre-mesure qui rend plus difficile ou impossible l'accès à l'ensemble des informations contenues dans le premier flux vidéo en bande de base à partir de différents exemplaires du second flux vidéo en bande de base composé par le premier terminal, cette étape d'exécution étant automatiquement déclenchée en réponse au signalement d'un comportement anormal et n'étant pas déclenchée en l'absence de ce signalement d'un comportement anormal,
**caractérisé en ce que** le procédé comporte en plus :
- la lecture (140) du même flux vidéo est préalablement exécutée par plusieurs seconds terminaux distincts du premier terminal et, lors de chacune de ces lectures, lorsqu'une donnée caractéristique construite par le second terminal et une première image du premier flux vidéo en bande de base sont utilisées pour composer le second flux vidéo en bande de base, cette donnée caractéristique est associée à un identifiant de cette première image, puis cette donnée caractéristique et l'identifiant de la première image qui lui est associé sont transmis à un serveur d'agrégation de données, puis
- le serveur d'agrégation construit (142), à partir des données caractéristiques transmises associées à l'identifiant de la même première image, des données statistiques représentatives des comportements des utilisateurs des seconds terminaux aux instants où cette première image est traitée par les composeurs de ces seconds terminaux, puis
- l'étape (134) de comparaison comporte la comparaison à un premier seuil prédéterminé d'un écart entre :
• la ou les données caractéristiques construites par le premier terminal et utilisées par ce premier terminal, en combinaison avec la première image, pour composer le second flux vidéo en bande de base, et
• les données statistiques construites par le serveur d'agrégation pour cette même première image.

2. Procédé selon la revendication 1, dans lequel :
- les données statistiques construites (142) pour la première image comportent une cartographie associant à chaque pixel de cette première image un nombre représentatif de la probabilité qu'un utilisateur pointe son regard en direction de ce pixel,
- l'une desdites au moins une donnée caractéristique construite par le premier terminal est la position d'un point d'intérêt dans la première image vers lequel l'utilisateur du premier terminal pointe son regard lorsque la première image est traitée par le composeur, et
- l'écart comparé au premier seuil prédéterminé est une distance calculée à partir de la position du point d'intérêt dans la première image et de la où des positions des pixels associés par la cartographie aux probabilités les plus élevées qu'un utilisateur pointe son regard en direction de ces pixels.

3. Procédé selon l'une quelconque des revendications précédentes, dans lequel ladite au moins une mesure représentative d'un comportement de l'utilisateur comporte une mesure représentative d'une position ou d'un déplacement de l'utilisateur.

4. Procédé selon la revendication 3, dans lequel :
- l'une desdites au moins une donnée caractéristique construite par le premier terminal est une donnée caractéristique de la vitesse ou de l'accélération d'un déplacement de l'utilisateur du premier terminal, et
- l'étape (134) de comparaison comporte la comparaison de cette donnée caractéristique de la vitesse ou de l'accélération à un deuxième seuil prédéterminé dudit ensemble de seuils, ce deuxième seuil étant calibré pour discriminer un déplacement d'un être humain et un déplacement d'un automate.

5. Procédé selon l'une quelconque des revendications précédentes, dans lequel :
- le procédé comporte une phase (138) d'apprentissage supervisée, lors de laquelle un classifieur établit, pour au moins une donnée caractéristique dite apprise, la valeur d'un troisième seuil à partir d'un premier et d'un deuxième jeux préenregistrés de données caractéristiques, les données caractéristiques du premier jeu ayant été construites lorsque les mesures collectées sont générées par un être humain et les données caractéristiques du deuxième jeu ayant été construites lorsque les mesures collectées sont générées à l'aide d'un automate, puis
- l'une desdites au moins une donnée caractéristique construite par le premier terminal est la donnée caractéristique apprise, et
- l'étape (134) de comparaison comporte l'exécution du classifieur, cette exécution comportant la comparaison de la valeur de la donnée caractéristique apprise au troisième seuil prédéterminé.

6. Procédé selon les revendications 4 et 5 prises ensemble, dans lequel le procédé comporte le calcul (136) d'une note globale en fonction du nombre de fois où les premier, deuxième et troisième seuils ont été franchis à l'intérieur d'une fenêtre temporelle prédéterminée et l'exécution de la contre-mesure est uniquement déclenchée si cette note globale franchit un quatrième seuil prédéterminé.

7. Procédé selon l'une quelconque des revendications précédentes, dans lequel, avant la décompression du flux vidéo, le premier terminal déchiffre le flux vidéo à l'aide d'une clé secrète.

8. Ensemble d'un premier terminal et de plusieurs seconds terminaux de lecture d'un flux vidéo pour la mise en œuvre d'un procédé conforme à l'une quelconque des revendications 1 à 7, dans lequel :
- le premier terminal (8) et chaque second terminal (34) sont configurés pour exécuter les étapes suivantes :
- collecter au moins une mesure représentative d'un comportement d'un utilisateur de ce terminal pendant la lecture de ce flux vidéo, et construire à partir de ladite au moins une mesure collectée au moins une donnée caractéristique de ce comportement de cet utilisateur,
- décompresser le flux vidéo pour obtenir un premier flux vidéo en bande de base qui est indépendant de ladite au moins une mesure collectée, puis
- composer, à partir de ladite au moins une donnée caractéristique construite et du premier flux vidéo en bande de base, un second flux vidéo en bande de base qui varie en fonction de ladite au moins une donnée caractéristique construite, le second flux vidéo contenant seulement une fraction de chaque image complète du premier flux vidéo,
- le premier terminal est également apte :
- à comparer ladite au moins une donnée caractéristique à un ensemble de seuils prédéterminés, chacun desquels, lorsqu'il est franchi, caractérise un comportement anormal de l'utilisateur, puis
- à signaler un comportement anormal si au moins une partie prédéterminée de ces seuils est franchie, et, sinon, à ne pas signaler ce comportement anormal, puis
- en réponse au signalement d'un comportement anormal, à déclencher automatiquement l'exécution d'une contre-mesure qui rend plus difficile ou impossible l'accès à l'ensemble des informations contenues dans le premier flux vidéo en bande de base à partir de différents exemplaires du second flux vidéo en bande de base composé par le premier terminal, et à ne pas déclencher l'exécution de cette contre-mesure en l'absence de ce signalement d'un comportement anormal,
**caractérisé en ce que** :
- les seconds terminaux (34) sont chacun aptes, préalablement à la lecture du flux vidéo par le premier terminal, à lire le même flux vidéo et, lors de chacune des lectures de ce même flux vidéo, lorsqu'une donnée caractéristique construite par le second terminal et une première image du premier flux vidéo en bande de base sont utilisées pour composer le second flux vidéo en bande de base, à associer cette donnée caractéristique à un identifiant de cette première image, puis à transmettre cette donnée caractéristique et l'identifiant de la première image qui lui est associé à un serveur d'agrégation de données,
- le premier terminal (8) est apte :
- à obtenir de la part du serveur d'agrégation des données statistiques représentatives des comportements des utilisateurs des seconds terminaux aux instants où cette première image est traitée par les composeurs de ces seconds terminaux, ces données statistiques ayant été construites, par le serveur d'agrégation, à partir des données caractéristiques transmises, par les second terminaux, associées à l'identifiant de la même première image, puis
- à comparer, à un premier seuil prédéterminé, un écart entre :
∘ la ou les données caractéristiques construites par le premier terminal et utilisées par ce premier terminal, en combinaison avec la première image, pour composer le second flux vidéo en bande de base, et
∘ les données statistiques obtenues de la part du serveur d'agrégation pour cette même première image.

9. Serveur d'agrégation de données pour la mise en œuvre d'un procédé conforme à la revendication 1, **caractérisé en ce que** le serveur d'agrégation est apte :
- à construire, à partir des données caractéristiques reçues associées à l'identifiant de la même première image, les données statistiques représentatives des comportements des utilisateurs des seconds terminaux aux instants où cette première image est traitée par les composeurs de ces seconds terminaux, puis
- à comparer à un premier seuil prédéterminé un écart entre :
• la ou les données caractéristiques construites par le premier terminal et utilisées par ce premier terminal, en combinaison avec la première image, pour composer le second flux vidéo en bande de base, et
• les données statistiques construites par le serveur d'agrégation pour cette même première image, ou
- à transmettre ces données statistiques au premier terminal pour qu'il puisse faire la comparaison au premier seuil prédéterminé.

10. Support d'enregistrement d'informations, **caractérisé en ce qu'**il comporte des instructions pour la mise en œuvre d'un procédé de lecture conforme à l'une quelconque des revendications 1 à 7, lorsque ces instructions sont exécutées par un microprocesseur électronique.

## Patentansprüche

1. Verfahren zum Abspielen eines Videostroms, wobei ein erstes Endgerät:
- mindestens eine für ein Verhalten eines Benutzers des ersten Endgeräts während des Abspielens dieses Videostroms repräsentative Messung sammelt (94, 130) und ausgehend von der mindestens einen gesammelten Messung mindestens einen charakteristischen Datenwert dieses Verhaltens dieses Benutzers konstruiert (96, 132),
- den Videostrom dekomprimiert (106), um einen ersten Videostrom im Basisband zu erhalten, der von der mindestens einen gesammelten Messung unabhängig ist, dann
- ausgehend von dem mindestens einen konstruierten charakteristischen Datenwert und vom ersten Videostrom im Basisband einen zweiten Videostrom im Basisband zusammensetzt (110), der abhängig vom mindestens einen konstruierten charakteristischen Datenwert variiert, wobei der zweite Videostrom nur einen Bruchteil jedes vollständigen Bilds des ersten Videostroms enthält,
- einen Schritt (134) des Vergleichs des mindestens einen charakteristischen Datenwerts mit einer Einheit von vorbestimmten Schwellen, von denen jede, wenn sie überschritten wird, ein anormales Verhalten des Benutzers charakterisiert, dann
- einen Schritt (134) des Signalisierens eines anormalen Verhaltens, wenn mindestens ein vorbestimmter Teil dieser Schwellen überschritten wird, und sonst die Abwesenheit dieser Signalisierung eines anormalen Verhaltens, dann
- einen Schritt (120) der Ausführung einer Gegenmessung, die den Zugang zu der Einheit der im ersten Videostrom im Basisband enthaltenen Informationen erschwert oder unmöglich macht, ausgehend von verschiedenen Exemplaren des zweiten Videostroms im Basisband, der vom ersten Endgerät zusammengesetzt wird, wobei dieser Ausführungsschritt automatisch als Antwort auf die Signalisierung eines anormalen Verhaltens ausgelöst wird und in Abwesenheit dieser Signalisierung eines anormalen Verhaltens nicht ausgelöst wird,
**dadurch gekennzeichnet, dass** das Verfahren außerdem aufweist:
- das Abspielen (140) des gleichen Videostroms wird vorab von mehreren verschiedenen zweiten Endgeräten ausgeführt, die sich vom ersten Endgerät unterscheiden, und bei jedem dieser Abspielvorgänge, wenn ein vom zweiten Endgerät konstruierter charakteristischer Datenwert und ein erstes Bild des ersten Videostroms im Basisband verwendet werden, um den zweiten Videostrom im Basisband zusammenzusetzen, wird dieser charakteristische Datenwert einer Kennung dieses ersten Bilds zugeordnet, dann werden dieser charakteristische Datenwert und die Kennung des ersten Bilds, die ihm zugeordnet ist, an einen Datenaggregationsserver übertragen, dann
- konstruiert (142) der Aggregationsserver ausgehend von den übertragenen charakteristischen Daten, die der Kennung des gleichen ersten Bilds zugeordnet sind, statistische Daten, die für die Verhaltensweisen der Benutzer der zweiten Endgeräte zu den Zeitpunkten repräsentativ sind, zu denen dieses erste Bild von den Zusammensetzern dieser zweiten Endgeräte verarbeitet wird, dann
- weist der Vergleichsschritt (134) den Vergleich mit einer ersten vorbestimmten Schwelle einer Abweichung auf zwischen:
• dem oder den vom ersten Endgerät konstruierten und von diesem ersten Endgerät verwendeten charakteristischen Datenwert oder charakteristischen Datenwerten in Kombination mit dem ersten Bild, um den zweiten Videostrom im Basisband zusammenzusetzen, und
• den vom Aggregationsserver für dieses gleiche erste Bild konstruierten statistischen Daten.

2. Verfahren nach Anspruch 1, wobei:
- die konstruierten statistischen Daten (142) für das erste Bild eine Kartographie aufweisen, die jedem Pixel dieses erste Bilds eine für die Wahrscheinlichkeit, dass ein Benutzer seinen Blick in Richtung dieses Pixels richtet, repräsentative Zahl zuordnet,
- einer der mindestens einen vom ersten Endgerät konstruierten charakteristischen Datenwerte die Position eines interessierenden Punkts im ersten Bild ist, auf den der Benutzer des ersten Endgeräts seinen Blick richtet, wenn das erste Bild vom Zusammensetzer verarbeitet wird, und
- die mit der ersten vorbestimmten Schwelle verglichene Abweichung ein Abstand ist, der ausgehend von der Position des interessierenden Punkts im ersten Bild und von der oder den Position(en) der Pixel berechnet wird, die von der Kartographie den höchsten Wahrscheinlichkeiten zugeordnet werden, dass ein Benutzer seinen Blick in Richtung dieser Pixel richtet.

3. Verfahren nach einem der vorhergehenden Ansprüche, wobei die mindestens eine für ein Verhalten des Benutzers repräsentative Messung eine für eine Position oder eine Bewegung des Benutzers repräsentative Messung aufweist.

4. Verfahren nach Anspruch 3, wobei:
- einer der vom ersten Endgerät konstruierten mindestens einen charakteristischen Datenwerte ein charakteristischer Datenwert der Geschwindigkeit oder der Beschleunigung einer Bewegung des Benutzers des ersten Endgeräts ist, und
- der Vergleichsschritt (134) den Vergleich dieses charakteristischen Datenwerts der Geschwindigkeit oder der Beschleunigung mit einer zweiten vorbestimmten Schwelle der Einheit von Schwellen aufweist, wobei diese zweite Schwelle kalibriert ist, um eine Bewegung eines Menschen von einer Bewegung eines Automaten zu unterscheiden.

5. Verfahren nach einem der vorhergehenden Ansprüche, wobei:
- das Verfahren eine überwachte Lernphase (138) aufweist, während der ein Klassifikator für mindestens einen so genannten gelernten charakteristischen Datenwert den Wert einer dritten Schwelle ausgehend von einem ersten und einem zweiten vorab gespeicherten Satz von charakteristischen Daten erstellt, wobei die charakteristischen Daten des ersten Satzes konstruiert wurden, wenn die gesammelten Messungen von einem Menschen erzeugt werden, und die charakteristischen Daten des zweiten Satzes konstruiert wurden, wenn die gesammelten Messungen mit Hilfe eines Automaten erzeugt werden, dann
- einer der vom ersten Endgerät konstruierten mindestens einen charakteristischen Datenwerte der gelernte charakteristische Datenwert ist, und
- der Vergleichsschritt (134) die Ausführung des Klassifikators aufweist, wobei diese Ausführung den Vergleich des Werts des gelernten charakteristischen Datenwerts mit der vorbestimmten dritten Schwelle aufweist.

6. Verfahren nach den Ansprüchen 4 und 5 zusammengenommen, wobei das Verfahren die Berechnung (136) einer Gesamtnote abhängig von der Anzahl von Malen aufweist, in denen die erste, zweite und dritte Schwelle innerhalb eines vorbestimmten Zeitfensters überschritten wurden, und die Ausführung der Gegenmessung nur ausgelöst wird, wenn diese Gesamtnote eine vierte vorbestimmte Schwelle überschreitet.

7. Verfahren nach einem der vorhergehenden Ansprüche, wobei vor der Dekomprimierung des Videostroms das erste Endgerät den Videostrom mit Hilfe eines geheimen Schlüssels entschlüsselt.

8. Einheit eines ersten Endgeräts und mehrerer zweiter Endgeräte zum Abspielen eines Videostroms zur Durchführung eines Verfahrens gemäß einem der Ansprüche 1 bis 7, wobei:
- das erste Endgerät (8) und jedes zweite Endgerät (34) konfiguriert sind, die folgenden Schritte auszuführen:
- mindestens eine Messung zu sammeln, die für ein Verhalten eines Benutzers dieses Endgeräts während des Abspielens dieses Videostroms repräsentativ ist, und ausgehend von der mindestens einen gesammelten Messung mindestens einen charakteristischen Datenwert dieses Verhaltens dieses Benutzers zu konstruieren,
- den Videostrom zu dekomprimieren, um einen ersten Videostrom im Basisband zu erhalten, der von der mindestens einen gesammelten Messung unabhängig ist, dann
- ausgehend vom mindestens einen konstruierten charakteristischen Datenwert und vom ersten Videostrom im Basisband einen zweiten Videostrom im Basisband zusammenzusetzen, der abhängig vom mindestens einen konstruierten charakteristischen Datenwert variiert, wobei der zweite Videostrom nur einen Teil jedes vollständigen Bilds des ersten Videostroms enthält,
- das erste Endgerät ebenfalls fähig ist:
- den mindestens einen charakteristischen Datenwert mit einer Einheit von vorbestimmten Schwellen zu vergleichen, von denen jede, wenn sie überschritten wird, ein anormales Verhalten des Benutzers charakterisiert, dann
- ein anormales Verhalten zu signalisieren, wenn mindestens ein vorbestimmter Teil dieser Schwellen überschritten wird, und sonst dieses anormale Verhalten nicht zu signalisieren, dann
- als Antwort auf die Signalisierung eines anormalen Verhaltens automatisch die Ausführung einer Gegenmessung auszulösen, die den Zugang zu der Einheit von Informationen, die im ersten Videostrom im Basisband enthalten sind, ausgehend von verschiedenen Exemplaren des zweiten Videostroms im Basisband, der vom ersten Endgerät zusammengesetzt wird, erschwert oder unmöglich macht, und die Ausführung dieser Gegenmessung in Abwesenheit dieser Signalisierung eines anormalen Verhaltens nicht auszulösen,
**dadurch gekennzeichnet, dass**:
- die zweiten Endgeräte (34) je fähig sind, vor dem Abspielen des Videostroms durch das erste Endgerät den gleichen Videostrom abzuspielen, und bei jedem der Abspielvorgänge dieses gleichen Videostroms, wenn ein vom zweiten Endgerät konstruierter charakteristischer Datenwert und ein erstes Bild des ersten Videostroms im Basisband verwendet werden, um den zweiten Videostrom im Basisband zusammenzusetzen, diesen charakteristischen Datenwert einer Kennung dieses ersten Bilds zuzuordnen, dann diesen charakteristischen Datenwert und die Kennung des ersten Bilds, die ihm zugeordnet ist, an einen Datenaggregationsserver zu übertragen,
- das erste Endgerät (8) fähig ist:
- vom Aggregationsserver statistische Daten zu erhalten, die für die Verhaltensweisen der Benutzer der zweiten Endgeräte zu den Zeitpunkten repräsentativ sind, zu denen dieses erste Bild von den Zusammensetzern dieser zweiten Endgeräte verarbeitet wird, wobei diese statistischen Daten vom Aggregationsserver ausgehend von den von den zweiten Endgeräten übertragenen charakteristischen Daten konstruiert wurden, die der Kennung des gleichen ersten Bilds zugeordnet sind, dann
- mit einer ersten vorbestimmten Schwelle eine Abweichung zu vergleichen zwischen:
o dem oder den charakteristischen Datenwerten, die vom ersten Endgerät konstruiert und von diesem ersten Endgerät verwendet werden, in Kombination mit dem ersten Bild, um den zweiten Videostrom im Basisband zusammenzusetzen, und
o den vom Aggregationsserver für dieses gleiche erste Bild erhaltenen statistischen Daten.

9. Datenaggregationsserveur zur Durchführung eines Verfahrens gemäß Anspruch 1, **dadurch gekennzeichnet, dass** der Aggregationsserver fähig ist:
- ausgehend von den empfangenen charakteristischen Daten, die der Kennung des gleichen ersten Bilds zugeordnet sind, die statistischen Daten zu konstruieren, die für Verhaltensweisen der Benutzer der zweiten Endgeräte zu den Zeitpunkten repräsentativ sind, zu denen dieses erste Bild von den Zusammensetzern dieser zweiten Endgeräte verarbeitet wird, dann
- mit einer ersten vorbestimmten Schwelle eine Abweichung zu vergleichen zwischen:
• dem oder den vom ersten Endgerät konstruierten und von diesem ersten Endgerät verwendeten charakteristischen Datenwert oder charakteristischen Daten, in Kombination mit dem ersten Bild, um den zweiten Videostrom im Basisband zusammenzusetzen, und
• den vom Aggregationsserver für dieses gleiche erste Bild konstruierten statistischen Daten, oder
- diese statistischen Daten an das erste Endgerät zu übertragen, damit es den Vergleich mit der ersten vorbestimmten Schwelle durchführen kann.

10. Informationsspeicherträger, **dadurch gekennzeichnet, dass** er Anweisungen zur Durchführung eines Abspielverfahrens nach einem der Ansprüche 1 bis 7 aufweist, wenn diese Anweisungen von einem elektronischen Mikroprozessor ausgeführt werden.

## Claims

1. Method for reading a video stream, in which a first terminal:
- collects (94, 130) at least one measurement representative of a behaviour of a user of the first terminal during the reading of this video stream and constructs (96, 132), on the basis of said at least one collected measurement, at least one datum characteristic of this behaviour of this user,
- decompresses (106) the video stream to obtain a first baseband video stream which is independent of said at least one collected measurement, and then
- composes (110), on the basis of said at least one constructed characteristic datum and of the first baseband video stream, a second baseband video stream which varies as a function of said at least one constructed characteristic datum, the second video stream containing only a fraction of each complete image of the first video stream,
- a step (134) of comparing said at least one characteristic datum with a set of predetermined thresholds, each of which, when it is crossed, characterizes an abnormal behaviour of the user, and then
- a step (134) of signalling an abnormal behaviour if at least one predetermined portion of these thresholds is crossed, and, otherwise, the absence of this signalling of an abnormal behaviour, and then
- a step (120) of executing a counter-measure which makes it more difficult or impossible to access the set of information items contained in the first baseband video stream on the basis of various proofs of the second baseband video stream composed by the first terminal, this execution step being triggered automatically in response to the signalling of an abnormal behaviour and not being triggered in the absence of this signalling of an abnormal behaviour,
**characterized in that** the method additionally comprises:
- the reading (140) of the same video stream is previously executed by several second terminals distinct from the first terminal and, during each of these readings, when a characteristic datum constructed by the second terminal and a first image of the first baseband video stream are used to compose the second baseband video stream, this characteristic datum is associated with an identifier of this first image, and then this characteristic datum and the identifier associated therewith of the first image are transmitted to a data aggregation server, and then
- the aggregation server constructs (142), on the basis of the transmitted characteristic data associated with the identifier of the same first image, statistical data representative of the behaviours of the users of the second terminals at the instants at which this first image is processed by the composers of these second terminals, and then
- the step (134) of comparing comprises the comparing, with a first predetermined threshold, of a disparity between:
• the characteristic datum or data constructed by the first terminal and used by this first terminal, in combination with the first image, to compose the second baseband video stream, and
• the statistical data constructed by the aggregation server for this same first image.

2. Method according to Claim 1, in which:
- the statistical data constructed (142) for the first image comprise a mapping associating with each pixel of this first image a number representative of the probability that a user points their gaze in the direction of this pixel,
- one of said at least one characteristic datum constructed by the first terminal is the position of a point of interest in the first image towards which the user of the first terminal points their gaze when the first image is processed by the composer, and
- the disparity compared with the first predetermined threshold is a distance calculated on the basis of the position of the point of interest in the first image and of the position or positions of the pixels associated by the mapping with the highest probabilities that a user points their gaze in the direction of these pixels.

3. Method according to either one of the preceding claims, in which said at least one measurement representative of a behaviour of the user comprises a measurement representative of a position or of a movement of the user.

4. Method according to Claim 3, in which:
- one of said at least one characteristic datum constructed by the first terminal is a datum characteristic of the speed or of the acceleration of a movement of the user of the first terminal, and
- the step (134) of comparing comprises the comparing of this datum characteristic of the speed or of the acceleration with a second predetermined threshold of said set of thresholds, this second threshold being calibrated to discriminate a movement of a human being and a movement of an automaton.

5. Method according to any one of the preceding claims, in which:
- the method comprises a supervised learning phase (138), during which a classifier establishes, for at least one so-called learnt characteristic datum, the value of a third threshold on the basis of a first and of a second pre-recorded suites of characteristic data, the characteristic data of the first suite having been constructed when the collected measurements are generated by a human being and the characteristic data of the second suite having been constructed when the collected measurements are generated with the aid of an automaton, and then
- one of said at least one characteristic datum constructed by the first terminal is the learnt characteristic datum, and
- the step (134) of comparing comprises the execution of the classifier, this execution comprising the comparing of the value of the learnt characteristic datum with the third predetermined threshold.

6. Method according to Claims 4 and 5 taken together, in which the method comprises the calculation (136) of a global score as a function of the number of times that the first, second and third thresholds have been crossed inside a predetermined time window and the execution of the counter-measure is triggered only if this global score crosses a fourth predetermined threshold.

7. Method according to any one of the preceding claims, in which, before the decompression of the video stream, the first terminal decrypts the video stream with the aid of a secret key.

8. Assembly of a first terminal and of multiple second terminals for reading a video stream for the implementation of a method in accordance with any one of Claims 1 to 7, in which
- the first terminal (8) and each second terminal (34) are configured to execute the following steps:
- collect at least one measurement representative of a behaviour of a user of this terminal during the reading of this video stream, and construct, on the basis of said at least one collected measurement, at least one datum characteristic of this behaviour of this user,
- decompress the video stream to obtain a first baseband video stream which is independent of said at least one collected measurement, and then
- compose, on the basis of said at least one constructed characteristic datum and of the first baseband video stream, a second baseband video stream which varies as a function of said at least one constructed characteristic datum, the second video stream containing only a fraction of each complete image of the first video stream, the first terminal is also able:
- to compare said at least one characteristic datum with a set of predetermined thresholds, each of which, when it is crossed, characterizes an abnormal behaviour of the user, and then
- to signal an abnormal behaviour if at least one predetermined portion of these thresholds is crossed, and, otherwise, to not signal this abnormal behaviour, and then
- in response to the signalling of an abnormal behaviour, to automatically trigger the execution of a counter-measure which makes it more difficult or impossible to access the set of information items contained in the first baseband video stream on the basis of various proofs of the second baseband video stream composed by the first terminal, and to not trigger the execution of this counter-measure in the absence of this signalling of an abnormal behaviour,
**characterized in that**:
- the second terminals (34) are each able, prior to the reading of the video stream by the first terminal, to read the same video stream and, during each of these readings of this same video stream, when a characteristic datum constructed by the second terminal and a first image of the first baseband video stream are used to compose the second baseband video stream, to associate this characteristic datum with an identifier of this first image, and then to transmit this characteristic datum and the identifier associated therewith of the first image to a data aggregation server,
- the first terminal (8) is able:
- to obtain, from the aggregation server, statistical data representative of the behaviours of the users of the second terminals at the instants at which this first image is processed by the composers of these second terminals, these statistical data having been constructed, by the aggregation server, on the basis of characteristic data transmitted, by the second terminals, associated with the identifier of the same first image, and then
- to compare, with a first predetermined threshold, a disparity between:
• the characteristic datum or data constructed by the first terminal and used by this first terminal, in combination with the first image, to compose the second baseband video stream, and
• the statistical data obtained from the aggregation server for this same first image.

9. Data aggregation server for the implementation of a method in accordance with Claim 1, **characterized in that** the aggregation server is able:
- to construct, on the basis of the received characteristic data associated with the identifier of the same first image, the statistical data representative of the behaviours of the users of the second terminals at the instants at which this first image is processed by the composers of these second terminals, and then
- to compare, with a first predetermined threshold, a disparity between:
• the characteristic datum or data constructed by the first terminal and used by this first terminal, in combination with the first image, to compose the second baseband video stream, and
• the statistical data constructed by the aggregation server for this same first image, or
- to transmit these statistical data to the first terminal so that it can make the comparison with the first predetermined threshold.

10. Information recording medium, **characterized in that** it comprises instructions for the implementation of a reading method in accordance with any one of Claims 1 to 7, when these instructions are executed by an electronic microprocessor.
